# EUROPEAN PATENT APPLICATION

(11) **EP 4 825 169 A1**
(43) Date of publication of application: **21.10.2026**
(21) Application number: 26171667.4
(22) Date of filing: 10.04.2026
(51) Int. Cl.: A01K 93/00

(54) **ZIG RIG DEPLOYMENT UNIT**

(30) Priority: 10.04.2025 GB 202505376
(71) Applicant: Seddon, Steven Paul, Liverpool Merseyside L31 5NL (GB)
(72) Inventor: Seddon, Steven Paul, Liverpool Merseyside L31 5NL (GB)
(74) Representative: Forresters IP LLP

(57) **Abstract**

A zig rig deployment unit for use in fishing, comprises:
(a) a buoyant spool (1) having a central hole (5) extending therethrough and configured to receive and hold a zig rig line wound around the spool;
(b) a weighted base (2) configured to be attached or attachable to the spool, wherein the weighted base is configured to rest on a lakebed or waterbed when deployed; and
(c) an attachment loop connected to the weighted base, the attachment loop being adapted for connection to a fishing main line;
wherein the central hole of the spool is configured to act as a release mechanism, enabling the zig rig line to unwind from the spool when the unit is submerged in water.

## Description

### FIELD

The present invention relates to fishing equipment, specifically a device for deploying a zig rig efficiently while preventing tangling during casting.

### BACKGROUND

The term "zig rig" is widely used in the fishing industry to describe a method of fishing a buoyant bait at various depths in the water column. Zig rigs are commonly used when targeting fish, such as carp, that feed at various depths within the water column. Typical zig rigs include a long length of fishing line with a hook attached at one end. A buoyant bait is attached, either directly or indirectly (for example by using a hair rig), to the hook. The other end of the fishing line is anchored to the lakebed by a weight, which itself is attached to the main fishing line. The main fishing line extends from the weight to a rod and reel. The length of the zig rig fishing line can be selected based on the desired depth at which the angler wishes to suspend the bait. The fishing line in a zig rig is typically in the region of 3 ft (0.914 m) to 12 ft (3.658 m) long.

Although zig rigs are highly effective once deployed, their casting and deployment present significant challenges due to their extended length, making them prone to snagging and tangling on obstacles such as:
· overhanging trees, bushes, islands, weed beds, and reeds.
· nearby fishing equipment and vegetation in the casting area.

To overcome these issues, the present invention provides a zig rig deployment unit, designed to prevent tangling and ensure controlled deployment upon entering the water.

### BRIEF DESCRIPTION OF THE INVENTION

According to a first aspect, there is provided a zig rig deployment unit for use in fishing, comprising:
(a) a buoyant spool having a central hole extending therethrough and being configured to receive and hold a zig rig line wound around the spool;
(b) a weighted base configured to be attached or attachable to the spool, wherein the weighted base is configured to rest on a lakebed or waterbed when deployed; and
(c) an attachment loop connected to the weighted base, the attachment loop being adapted for connection to a fishing main line;
wherein the central hole of the spool is configured to act as a release mechanism, enabling the zig rig line to unwind from the spool when the unit is submerged in water.

The spool may be made from a buoyant material selected from the group consisting of plastic, foam, or cork, to maintain flotation in water.

The spool may comprise an upper section and a lower section, wherein the lower section is wider than the upper section.

The width of the central hole may be greater at the lower section than at the upper section.

The weighted base may be made from a metal or composite material sufficiently dense to anchor the unit on a lakebed.

The central hole may be configured to allow passage of water to facilitate the release of the zig rig line during deployment.

The zig rig line may be held in place prior to deployment by polyvinyl alcohol (PVA) foam, wherein the PVA foam is either:
(a) inserted partially into the central hole of the spool; or
(b) dampened and adhered to a surface of the spool,
such that upon submersion, the PVA foam dissolves and releases the zig rig line for deployment.

The spool may be dimensioned to allow the zig rig line to be wrapped circumferentially around an outer surface of the spool to prevent tangling during casting.

The attachment loop may be configured to be connected to the main line via a quick-release clip, such as a lead clip, or a knotless connection.

According to a second aspect, there is provided a method of deploying a zig rig in fishing, comprising:
(a) attaching a zig rig line, having a buoyant bait, to a zig rig deployment unit according to the present disclosure;
(b) winding the zig rig line around the buoyant spool of the deployment unit;
(c) securing a hook of the zig rig to the deployment unit using PVA foam either inserted into the central hole of the spool or dampened and adhered to a top surface of the spool;
(d) attaching the deployment unit to a fishing main line via the attachment loop; and
(e) casting the deployment unit into a body of water,
wherein upon submersion, the PVA foam dissolves, enabling the central hole to act as a release mechanism and allowing the zig rig line to unwind from the spool for deployment.

According to a third aspect, there is provided a zig rig fishing system, comprising:
(a) a zig rig deployment unit according to the present disclosure;
(b) a zig rig line having a hook and a buoyant bait attached at one end;
(c) a PVA foam piece adapted to temporarily secure the hook to the spool via insertion into the central hole or adhesion to a surface of the spool; and
(d) a main fishing line configured to be connected to the attachment loop of the deployment unit.

### BRIEF DESCRIPTION OF THE FIGURES

In order that the present disclosure may be more readily understood, preferable embodiments thereof will now be described, by way of example only, with reference to the accompanying drawings, in which:
FIGURE 1 is a schematic view of a zig rig deployment unit according to the present disclosure;
FIGURE 2 is a schematic view of a buoyant spool according to the present disclosure;
FIGURE 3 is a cross-sectional view of a buoyant spool according to the present disclosure;
FIGURE 4 is a top-down view of components of a zig rig deployment unit according to the present disclosure;
FIGURE 5 is a schematic view of a weighted base according to the present disclosure;
FIGURE 6 is a cross-sectional view of a weighted base according to the present disclosure; and
FIGURE 7 is a top-down view of a weighted base and a connection rod according to the present disclosure.

### DETAILED DESCRIPTION OF THE DISCLOSURE

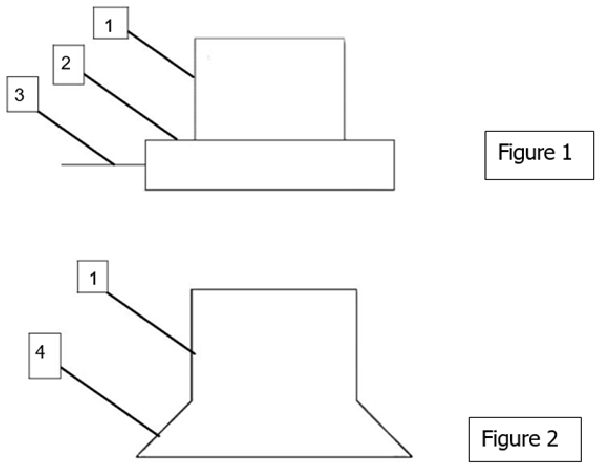

Figure 1 is a side profile view of a zig rig deployment unit according to the disclosure. The unit comprises a buoyant spool (1) shown connected to a weighted base (2). The weighted base (2) has an attachment loop (3) connected thereto via a connector rod, which allows attachment to the main fishing line (not shown) using, for example, a standard lead clip (not shown).

Figure 2 is a profile view of the buoyant spool (1) separated from the weighted base (2). A lower section (4) of the spool (1) is wider than the upper (i.e., top) section, allowing the spool (1) to be inserted into the weighted base (2) until the lower section (4) meets the base (2), ensuring a secure fit. Once deployed, the weighted base (2) sits on the lake bed. The upper section of the spool (1) is the region of the spool (1) that sits furthest away from the lake bed, in use.

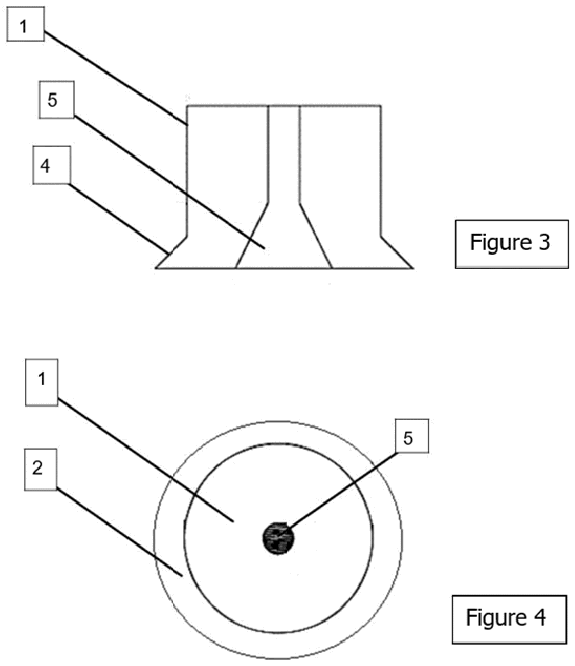

Figure 3 is a cross-sectional profile view of the buoyant spool (1), displaying the hole (5) running through the centre. The hole (5) is wider at the lower section (4) of the spool (1) than at the upper section, serving two key functions:
1. water channelling & PVA foam release - when submerged, water flows through the central hole (5), dissolving the PVA foam that holds the zig rig in place.
2. stabilization & controlled descent - the design of the central hole (5) allows water to pass through, reducing turbulence and ensuring a smooth, controlled descent.

The combination of these functions, along with the weighted base (2), enables an angler to:
· wrap the zig rig around the buoyant spool (1).
· attach PVA foam to the hook and either insert it into the top hole (5) or adhere it to the spool (1).

Upon water entry, the weighted base (2) causes the device to sink while the buoyant spool (1) ensures self-righting, allowing the zig rig to unwind and rise through the water column in a controlled manner.

Figure 4 is a top-down view of the buoyant spool (1), the weighted base (2), and the central hole (5). This view demonstrates how the spool (1) is positioned within the weighted base (2) when assembled.

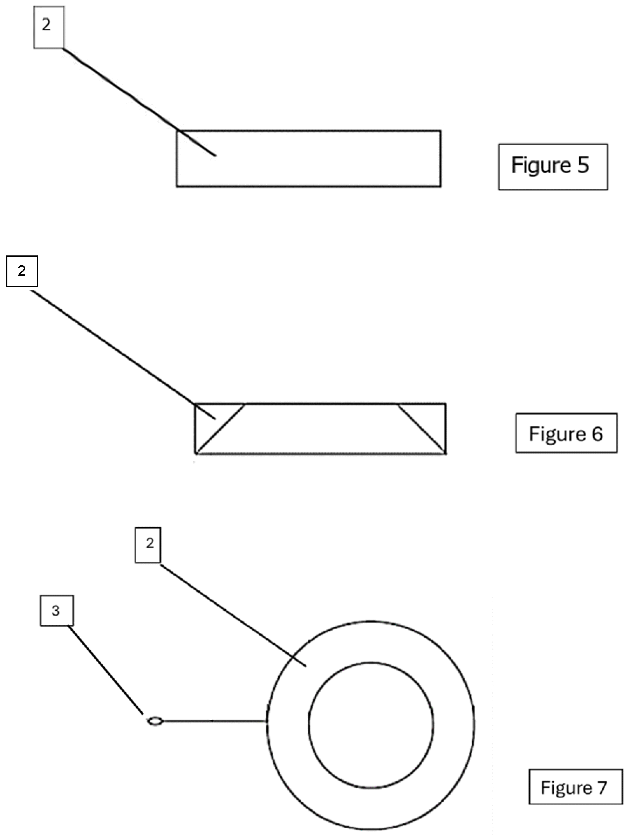

Figure 5 is a side profile view of the weighted base (2), showing its general structure and design.

Figure 6 is a cross-sectional profile view of the weighted base (2), highlighting how its internal cavity is designed to allow the upper portion of the buoyant spool (1) to be inserted through the internal cavity up until the point in which it fits over the lower portion (4) of the buoyant spool (1), securing the spool (1) in place.

Figure 7 is a top-down perspective of the weighted base (2), the attachment loop (3) and the connector rod, which facilitates attachment of the deployment unit to the main fishing line, for example via a lead clip. The design maintains a gap between the lead clip and the deployment unit, reducing interference and allowing for efficient rig deployment.

In one embodiment, the zig rig deployment unit consists of:
1. a buoyant spool (1) that allows the zig rig line to be wound around it.
2. a central hole (5) running through the spool, acting as a release mechanism for the zig rig upon submersion.
3. a weighted base (2), which keeps the unit anchored to the lakebed.
4. an attachment loop (3) located on the weighted base for securing the unit to the main fishing line using a lead clip.

To secure the zig rig before casting, a polyvinyl alcohol (PVA) foam piece may be used in one of two ways:
· Method 1: The PVA foam is inserted into the central hole (5), holding the rig in place.
· Method 2: The PVA foam is slightly dampened and adhered to the top surface of the spool, covering the hole.

The PVA foam piece may be connected to or folded around the hook of the zig rig prior to securing the zig rig to the spool (1).

Upon entering the water, the PVA foam dissolves, allowing the zig rig to unwind naturally and position the bait at the desired depth. This system ensures the rig is deployed smoothly without tangling, making it easier and more effective for anglers to fish at variable depths.

This invention provides an efficient, tangle-free solution for deploying zig rigs while maintaining a compact, easily castable design. The buoyant spool, weighted base, and central hole release mechanism work together to ensure a smooth, controlled deployment of the rig, making it highly effective for anglers.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. A zig rig deployment unit for use in fishing, comprising:
(a) a buoyant spool (1) having a central hole (5) extending therethrough and being configured to receive and hold a zig rig line wound around the spool;
(b) a weighted base (2) configured to be attached or attachable to the spool, wherein the weighted base is configured to rest on a lakebed or waterbed when deployed; and
(c) an attachment loop connected to the weighted base, the attachment loop being adapted for connection to a fishing main line;
wherein the central hole of the spool is configured to act as a release mechanism, enabling the zig rig line to unwind from the spool when the unit is submerged in water.

2. The zig rig deployment unit of claim 1, wherein the spool (1) is made from a buoyant material selected from the group consisting of plastic, foam, or cork, to maintain flotation in water.

3. The zig rig deployment unit of any preceding claim, wherein the spool (1) comprises an upper section and a lower section (4), wherein the lower section is wider than the upper section.

4. The zig rig deployment unit of claim 3, wherein the width of the central hole (5) is greater at the lower section (4) than at the upper section.

5. The zig rig deployment unit of any preceding claim, wherein the weighted base (2) is made from a metal or a composite material sufficient dense to anchor the unit on a lakebed.

6. The zig rig deployment unit of any preceding claim, wherein the central hole (5) is configured to allow passage of water to facilitate the release of the zig rig line during deployment.

7. The zig rig deployment unit of any preceding claim, wherein the zig rig line is held in place prior to deployment by polyvinyl alcohol (PVA) foam,
wherein the PVA foam is either:
(a) inserted partially into the central hole (5) of the spool (1); or
(b) dampened and adhered to a surface of the spool (1),
such that upon submersion, the PVA foam dissolves and releases the zig rig line for deployment.

8. The zig rig deployment unit of any preceding claim, wherein the spool (1) is dimensioned to allow the zig rig line to be wrapped circumferentially around an outer surface of the spool to prevent tangling during casting.

9. The zig rig deployment unit of any preceding claim, wherein the attachment loop is configured to be connected to the main line via a quick-release clip or knotless connection.

10. A method of deploying a zig rig in fishing, comprising:
(a) attaching a zig rig line, having a buoyant bait, to a zig rig deployment unit according to any preceding claim;
(b) winding the zig rig line around the buoyant spool (1) of the deployment unit;
(c) securing a hook of the zig rig to the deployment unit using PVA foam either inserted into the central hole (5) of the spool or dampened and adhered to a top surface of the spool;
(d) attaching the deployment unit to a fishing main line via the attachment loop; and
(e) casting the deployment unit into a body of water,
wherein upon submersion, the PVA foam dissolves, enabling the central hole to act as a release mechanism and allowing the zig rig line to unwind from the spool for deployment.

11. A zig rig fishing system, comprising:
(a) a zig rig deployment unit according to any one of claims 1 to 9;
(b) a zig rig line having a hook and a buoyant bait attached at one end;
(c) a PVA foam piece adapted to temporarily secure the hook to the spool (1) via insertion into the central hole (5) or adhesion to a surface of the spool; and
(d) a main fishing line configured to be connected to the attachment loop of the deployment unit.
